# EUROPÄISCHE PATENTSCHRIFT

(11) **EP 3 807 036 B1**
(45) Veröffentlichungstag und Bekanntmachung des Hinweises auf die Patenterteilung: **01.11.2023**
(21) Anmeldenummer: 19713417.4
(22) Anmeldetag: 21.03.2019
(51) Int. Cl.: B23B 51/04

(54) **TIEFLOCHBOHRER UND BOHRWERKZEUG MIT EINER ODER MEHREREN MULDEN IN DER SPANFLÄCHE**
DEEP HOLE DRILL AND DRILLING TOOL HAVING ONE OR MORE DEPRESSIONS IN THE CUTTING SURFACE
FORET LONG ET OUTIL DE FOND COMPORTANT UNE OU PLUSIEURS CAVITÉS DANS LA FACE DE COUPE

(30) Priorität: 13.06.2018 DE 102018114139
(43) Veröffentlichungstag der Anmeldung: 21.04.2021
(73) Patentinhaber: botek Präzisionsbohrtechnik GmbH, 72585 Riederich (DE)
(72) Erfinder: SCHUR, Gotthold, 72639 Neuffen (DE)
(74) Vertreter: DREISS Patentanwälte PartG mbB
(86) Internationale Anmeldenummer: PCT/EP2019/057070
(87) Internationale Veröffentlichungsnummer: WO 2019/238287

(56) Entgegenhaltungen:
- WO-A1-2004/087356
- WO-A1-2014/029380
- DE-A1-102009 024 256
- DE-U1- 20 321 368
- JP-A- S6 234 712
- US-A- 5 302 060
- US-A- 5 816 754

## Beschreibung

Die Erfindung betrifft einen Einlippenbohrer oder einen Zweilippenbohrer, gemäß dem Oberbegriff des Anspruchs 1. Ein solcher Bohrer ist aus DE 203 21 368 U bekannt,

Die Spanfläche der erfindungsgemäßen Bohrwerkzeuge ist zumeist eben und nicht, wie zum Beispiel bei einem Spiralbohrer, gewendelt.

Die für die Offenbarung der Erfindung wesentlichen Begriffe werden unter anderem im Zusammenhang mit der Figurenbeschreibung erläutert. Darüber hinaus werden am Ende der Figurenbeschreibung einzelne Begriffe in der Art eines Glossars erläutert.

Aus DE 103 16 116 A1 bzw. der DE 203 21 368 U1 ist ein Einlippenbohrer bekannt, der einen Spanformer aufweist, der sich parallel zur äußeren Schneide erstreckt. Ein solcher Spanformer beginnt am Außendurchmesser des Bohrers und erstreckt sich über den größten Teil der äußeren Schneide. Diese Ausgestaltung eines Spanformers soll zu einer günstigen Formung von Spänen führen und damit eine schnellere Bearbeitung ermöglichen. Bei diesem Bohrer wird die Schneide von dem Spanformer und der Freifläche gebildet. Dies bedeutet, dass der Keilwinkel der Schneide kleiner ist als bei einem Tieflochbohrer ohne Spanformer. Die JP S6 234 712 A beschreibt einen Bohrer in dessen Spanfläche Nuten eingeschliffen sind, die parallel zu einer Längsachse des Bohrers verlaufen.

Die WO 2014/029380 A1 beschreibt einen Bohrer in dessen Spanfläche eine Nut eingeschliffen ist, die parallel zu einer Längsachse des Bohrers verläuft.

Aus der US 5, 302, 060 und der US 5, 816, 754 sind Bohrwerkzeuge bekannt, bei denen Schneidplatten in den Bohrkopf eingesetzt werden. In diesen Schneidplatten ist eine Mulde vorhanden.

### Aufgabe der Erfindung

Der Erfindung liegt die Aufgabe zugrunde, einen Einlippenbohrer oder Zweilippenbohrer zu schaffen, der zur Zerspanung zäher und/oder langspanender Werkstoffe geeignet ist. Darüber hinaus soll er eine größere Standzeit als herkömmliche Bohrwerkzeuge mit Spanformern haben.

Diese Aufgabe wird durch die Merkmale des Anspruch 1 gelöst.

Eine erfindungsgemäße Mulde ist eine in die Spanfläche eingearbeitete Vertiefung. Zwischen einem Rand der Mulde und der Haupt-Schneide des Bohrwerkzeugs verbleibt ein schmaler Streifen der Spanfläche. Anders ausgedrückt: Die Mulde ist nicht Teil der Schneide. Darin unterscheidet sich eine Mulde von einem Spanformer; letzterer schließt unmittelbar an die (Haupt-)Schneide an, bzw. bildet einen Teil der Schneide.

Außerdem verbleibt auch zwischen der Neben-Schneide des Bohrwerkzeugs und dem Rand einer erfindungsgemäßen Mulde ein schmaler Streifen der Spanfläche.

Es hat sich bei Bohrversuchen überraschender Weise herausgestellt, dass die Mulden, obwohl sie einen gewissen Abstand zu der Schneide aufweisen, die Spanbildung positiv beeinflussen. Insbesondere beim Zerspanen zäher Werkstoffe werden die Späne durch den Einfluss der Mulde kürzer.

Weil die Mulde einen gewissen Abstand zu der Schneide aufweist, wird die Schneide durch die Mulde nicht geschwächt, wie dies bei herkömmlichen Spanformern der Fall ist. Daher ist die Standzeit eines erfindungsgenmäßen Tieflochbohrers mit Mulde sehr hoch. In den Unteransprüchen sind Maße für den Abstand der Mulde zur Haupt- und zur Nebenschneide beansprucht, die sich bei Bohrversuchen als geeignet erwiesen haben.

Es liegt auf der Hand, dass die Erfindung nicht auf bestimmte Geometrien von Mulden beschränkt ist.

Eine erfindungsgemäße Mulde kann in einer Ebene, die orthogonal zu der Schneide verläuft, die Form eines gleichschenkligen oder ungleichschenkligen Dreiecks haben. Sie kann auch im Querschnitt die Form eines Kreissegments oder eine andere gekrümmte Form aufweisen. Es ist auch möglich, dass die Mulden aus geraden Flächen und/oder (einfach oder mehrfach) gekrümmten Flächen zusammengesetzt sind.

Außerdem ist auch ein Abstand zwischen einem Rand der Mulden und der Nebenschneide vorhanden; so dass auch die Nebenschneide durch die Mulde nicht geschwächt wird. Das wirkt sich positiv auf die Standzeit der Schneidecke aus, die sich aus dem Schnittpunkt der äußeren Schneide und der Nebenschneide ergibt. Das ist besonders vorteilhaft, weil der Verschleiß eines Tieflochbohrers in der Regel an der Schneidecke beginnt. Gleichzeitig wird durch die Mulden die Spanbildung positiv beeinflusst; so dass auch langspanende Werkstoffe effektiv bearbeitet werden können.

In weiterer vorteilhafter Ausgestaltung der Erfindung sind in der Spanfläche des Tieflochbohrers zwei oder mehr erfindungsgemäße Mulden vorhanden. Die Mulden sind in der Regel nebeneinander entlang der Haupt-Schneide angeordnet.

Wenn nur eine Mulde vorgesehen ist, dann muss diese Mulde nicht mittig zu der Haupt-Schneide positioniert werden. Es ist vielmehr möglich und oft auch vorteilhaft, wenn die Mulde etwas in Richtung der Nebenschneide verschoben angeordnet wird. Dort erzielt man selbst mit einer relativ kleinen Mulde einen signifikanten positiven Effekt auf die Spanbildung.

Der erfindungsgemäße Tieflochbohrer kann auch mit einem Spanteiler versehen werden, welcher die Schneide in einen inneren Abschnitt und einen äußeren Abschnitt teilt. Dadurch wird die Breite der Späne reduziert.

Es hat sich weiter als vorteilhaft erwiesen, wenn dem inneren Abschnitt der Schneide eine Mulde zugeordnet ist. Entsprechend kann dem äußeren Abschnitt der Schneide eine Mulde zugeordnet sein. Daraus ergeben sich weitere sehr effektive Ausführungsformen (eine Mulde in dem inneren Abschnitt der Schneide, eine Mulde in dem äußeren Abschnitt der Schneide und je eine Mulde in dem inneren und dem äußeren Abschnitt der Schneide), bei denen mit einem relativ geringen Aufwand für das Einbringen der Mulde(n) in die Spanfläche eine sehr positive Beeinflussung der Spanbildung erreicht wird.

In weiterer vorteilhafter Ausgestaltung der Erfindung ist vorgesehen, dass zumindest der Bohrkopf des erfindungsgemäßen Tieflochbohrers nach dem Einbringen der erfindungsgemäßen Mulde ganz oder teilweise mit einer Verschleißschutzschicht, insbesondere einer Hartstoffbeschichtung versehen ist.

Weitere Einzelheiten, Merkmale und Vorteile des Gegenstandes der Erfindung ergeben sich aus den Weitere Einzelheiten, Merkmale und Vorteile des Gegenstandes der Erfindung ergeben sich aus den Unteransprüchen sowie aus der nachfolgenden Beschreibung der zugehörigen Zeichnungen, in der - beispielhaft - mehrere Ausführungsbeispiele der Erfindung dargestellt sind.

Es liegt auf der Hand, dass die Erfindung bei verschiedensten Formen und Geometrien von Mulden angewandt werden kann. Daher beschränken die in den Figuren dargestellten Geometrien von Mulden den Schutzbereich der beanspruchten Erfindung nicht, sondern dienen vor allem der Erläuterung und Veranschaulichung.

### Zeichnung

Es zeigen:
Figuren 1 und 2 einen Einlippenbohrer (Stand der Technik);
Figur 3 eine Ansicht von vorne auf den Einlippenbohrer gemäß Figur 1;
Figur 4 einen erfindungsgemäßen Zweilippenbohrer;
Figur 5 einen erfindungsgemäßen Einlippenbohrer mit einer Mulde;
Figur 6 einen erfindungsgemäßen Einlippenbohrer mit Spanteiler und Mulden; und
Figur 7 verschiedene Formen erfindungsgemäßer Mulden.

### Beschreibung der Ausführungsbeispiele

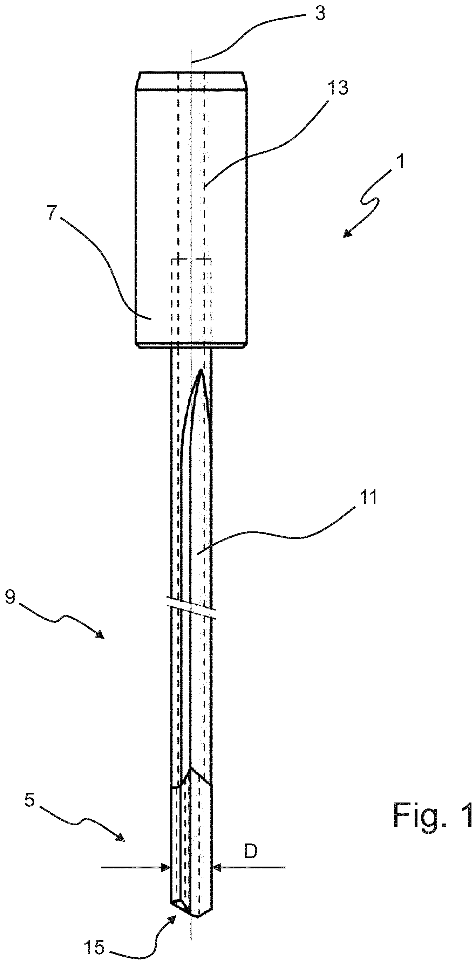

Bei allen Figuren werden für die gleichen Elemente beziehungsweise Bauteile die gleichen Bezugszeichen verwendet. In der Figur 1 ist ein in seiner Gesamtheit mit dem Bezugszeichen 1 versehener Einlippenbohrer dargestellt. Eine Mittelachse 3 ist gleichzeitig auch die Drehachse des Einlippenbohrers 1 beziehungsweise des Werkstücks (nicht dargestellt), wenn dieses beim Bohren in Rotation versetzt wird.

Ein Durchmesser des Einlippenbohrers 1 ist mit D bezeichnet. Der Einlippenbohrer 1 setzt sich aus drei Hauptkomponenten zusammen, nämlich einem Bohrkopf 5, einer Einspannhülse 7 und einem Schaft 9. Zweilippenbohrer haben der gleichen Aufbau und werden daher nicht gesondert dargestellt. Dieser Aufbau ist dem Fachmann sowohl von Einlippenbohrern 1 als auch von Zweilippenbohrern (nicht dargestellt) bekannt und wird daher nicht im Detail erläutert.

In dem Schaft 9 und dem Bohrkopf 5 ist eine Längsnut 11 vorhanden, die auch als Sicke bezeichnet wird. Die Längsnut 11 hat einen Querschnitt annähernd in Form eines Kreissegments mit einem Winkel üblicherweise von etwa 90° bis 130°. Die Längsnut 11 erstreckt sich von der Spitze des Bohrers bis vor die Einspannhülse 7. Wegen der Längsnut 11 haben Bohrkopf 5 und Schaft 9 einen Querschnitt annähernd in der Form eines Kreissegments mit einem Winkel von üblicherweise 230° bis 270° (Ergänzungswinkel zum Winkel der Längsnut 11).

Ein Kühlkanal 13 erstreckt sich über die gesamte Länge des Einlippenbohrers 1. An einem stirnseitigen Ende der Einspannhülse 7 wird Kühlmittel oder eine Mischung aus Kühlmittel und Luft unter Druck in den Kühlkanal 13 gefördert. Das Kühlmittel beziehungsweise das Gemisch aus Kühlmittel und Luft tritt im am gegenüberliegenden vorderen Ende 15 wieder aus dem Kühlkanal 13 aus. Das Kühlmittel hat mehrere Aufgaben. Es sorgt zum einen zur Kühlung und Schmierung der Schneide und der Führungsleisten. Außerdem fördert es die beim Bohren entstandenen Späne über die Längsnut 11 aus dem Bohrloch heraus.

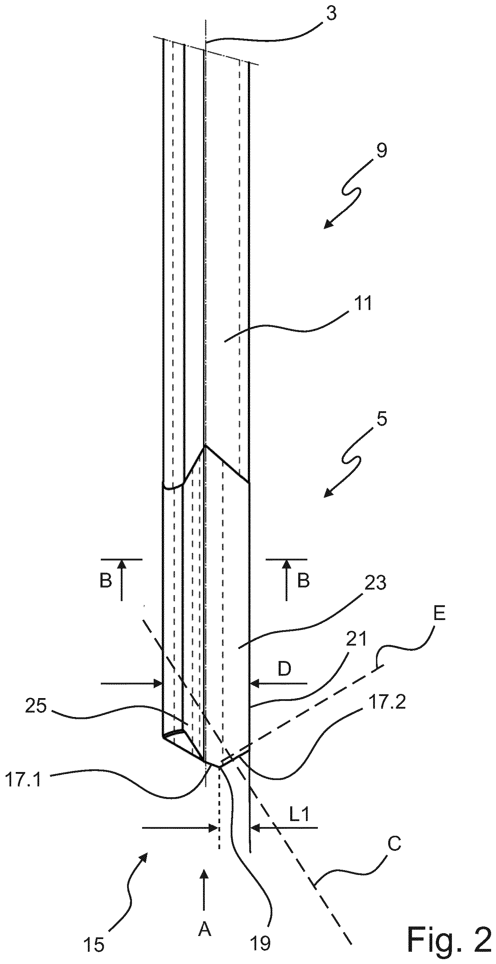

Das vordere Ende 15 ist in der Figur 2 etwas vergrößert dargestellt. Anhand dieser Figur werden Elemente des Bohrkopfs 5 näher erläutert.

Eine Schneide 17 besteht bei Einlippenbohrern 1 üblicherweise aus einer Innenschneide 17.1 und einer Außenschneide 17.2. Eine Schneidenspitze trägt das Bezugszeichen 19. Wie bei Einlippenbohrern üblich, ist die Schneidenspitze 19 radial beabstandet zu der Mittelachse 3 angeordnet. Die Innenschneide 17.1 erstreckt sich von der Mittelachse 3 bis zur Schneidenspitze 19. Die Außenschneide 17.2 erstreckt sich von der Schneidenspitze 19 ausgehend in radialer Richtung bis an den Außendurchmesser D des Bohrkopfs 5 und endet an einer Nebenschneide 21.

Ein Abstand der Schneidenspitze 19 von der Nebenschneide 21 ist in der Figur 2 mit L₁ bezeichnet. Die (gerade) Längsnut 11 wird durch eine ebene Spanfläche 23 und eine ebene Wand 25 begrenzt. Die Spanfläche 23 und die Wand 25 schließen einen Winkel von etwa 130° ein. In dem dargestellten Ausführungsbeispiel verläuft die Spanfläche 23 durch die Mittelachse 3. Das muss jedoch nicht zwingend so sein.

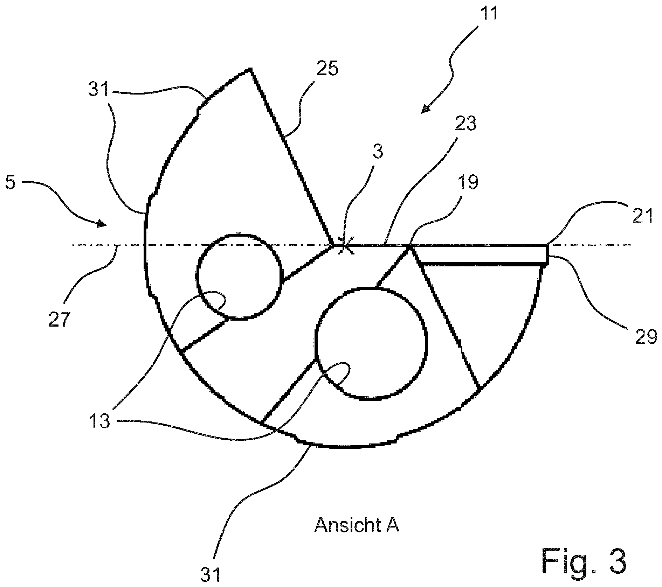

In der Figur 3 ist die Mittelachse 3 als "X" dargestellt. Gut zu erkennen ist auch die gerade (Längs-)Nut 11. Sie wird durch eine Spanfläche 23 und eine Wand 25 begrenzt. Die Spanfläche 23 und die Wand 25 schließen einen Winkel von etwa 130° ein. In dem dargestellten Ausführungsbeispiel verläuft die Spanfläche 23 durch die Mittelachse 3. Durch die Mittelachse 3 verläuft ebenfalls eine durch eine strichpunktierte Linie angedeutete Spanflächenebene 27. Die Spanflächenebene 27 ist eine geometrische Definition, die nicht immer an dem Einlippenbohrer sichtbar ist. Die Spanflächenebene 27 ist dadurch definiert, dass sie parallel zur Spanfläche 23 und durch die Mittelachse 3 verläuft.

Wenn die Spanfläche 23 durch die Mittelachse 3 verläuft, dann fallen Spanflächenebene 27 und Spanfläche 23 zusammen und man kann die Spanflächenebene 27 sehen.

In der Figur 3 ist die Innenschneide 17.1 als Linie zwischen der Mittelachse 3 und der Schneidenspitze 19 zu erkennen. Entsprechend ist die Außenschneide 17.2 als Linie zwischen der Schneidenspitze 19 und der Nebenschneide 21 zu erkennen. In der Ansicht von vorne fallen die Innenschneide 17.1 und die Außenschneide 17.2 mit der Spanfläche 23 zusammen. Aus Gründen der Übersichtlichkeit sind in der Figur 3 die Bezugszeichen 17.1 und 17.2 nicht eingetragen.

An dem Bohrkopf 5 sind über den Umfang verteilt mehrere Führungsleisten 29 und 31 ausgebildet. Die Führungsleiste 29 und die Spanfläche 23 bilden dort, wo sie einander schneiden, die Nebenschneide 21. Diese Führungsleiste wird nachfolgend als Rundschlifffase 29 bezeichnet. Die Rundschlifffase 29 und die Führungsleisten 31 haben die Aufgabe, den Bohrkopf 5 in der Bohrung zu führen.

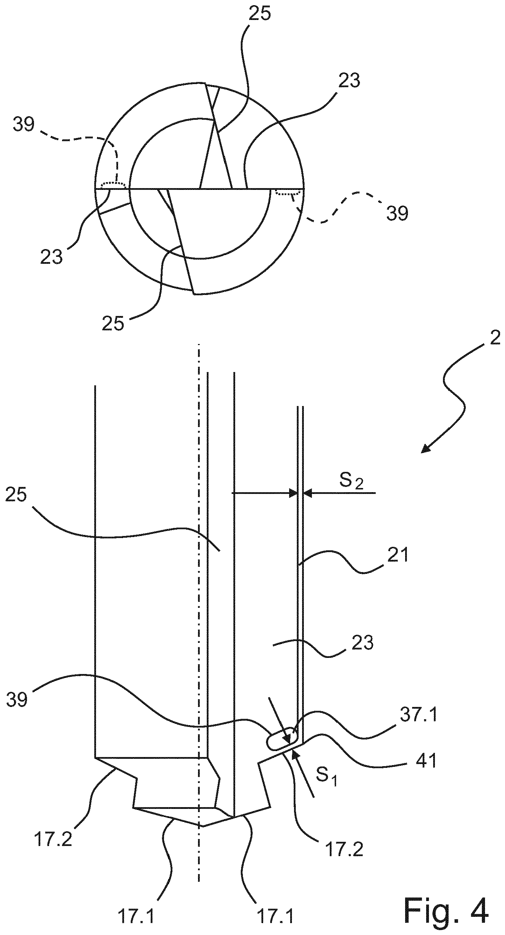

In der Figur 4 ist ein Ausführungsbeispiel eines erfindungsgemäßen Zweilippenbohrers 2 dargestellt. In der Seitenansicht sieht man beide inneren Schneiden 17.1 sowie beide äußeren Schneiden 17.2 und eine Spanfläche 23 von oben. In den beiden Spanflächen 23 (von denen nur eine sichtbar ist) sind zwei erfindungsgemäße Mulden 37 vorhanden. Die Mulden 37 können durch Schleifen, Erodieren oder Abtragen mittels Laserstrahl oder ein anderes geeignetes Verfahren in die Spanfläche(n) 23 eingebracht werden. Letztendlich hängt die Wahl des Verfahrens von den technologischen und geometrischen Randbedingungen ab. Beispielsweise können große Schleifscheiben dort wo die Spanfläche 23 von der Wand 25 begrenzt wird, nicht in die Spanfläche 23 eintauchen. Daher müssen kleine Schleifscheiben oder Schleifstifte eingesetzt werden. Dadurch ergeben sich gewisse Restriktionen bei der Geometrie der erfindungsgemäßen Mulden. Manchmal ist es daher erforderlich, die Mulden 37 durch Erodieren oder Abtragen mittels Laserstrahl einzubringen. Mit diesen Verfahren können nahezu alle gewünschten Formen von Mulden 37 nahezu überall in die Spanfläche(n) 23 eingebracht werden.

Wie aus der Figur 4 gut ersichtlich ist zwischen einem Rand (ohne Bezugszeichen in Figur 4) der Mulde 37.1 und der äußeren Schneide 17.2 ein Abstand S₁ vorhanden. Das bedeutet, dass ein schmaler Streifen der Spanfläche 23 zwischen der Mulde 37 und der äußeren Schneide 17.2 vorhanden ist. Infolgedessen ist bei einem solchen Werkzeug in der Regel der Spanwinkel gleich null Grad (0°) und der Keilwinkel der äußeren Schneide 17.2 ist entsprechend groß. In Folge dessen ist die Schneide 17.2 sehr robust und hat eine hohe Standzeit. Trotz des Abstands S₁ beeinflusst die in Fließrichtung der Späne hinter der Schneide 17.2 befindliche Mulde 37 die über sie gleitenden Späne (nicht dargestellt). Die Mulde 37 verformt oder beeinflusst den Span so, dass die beim Tiefbohren gewünschten kurzen Späne entstehen. Durch die Variation der Zahl der erfindungsgemäßen Mulden, deren Geometrie und/oder deren Abmessungen können die Späne in der gewünschten Weise in vielfältiger Weise angepasst werden.

Bei dem dargestellten Ausführungsbeispiel ist auch zwischen dem Rand 39 der Mulde 37.1 und der Nebenschneide 21 ein Abstand S₂ vorhanden, so dass die Nebenschneide 21 durch die Mulde 37.1 nicht geschwächt wird. Ganz besonders positiv wirkt sich das Vorhandensein der Abstände S₁ und S₂ auf die Belastbarkeit und die Standzeit der Schneidecken 41 aus, die, anders als beim Einsatz von herkömmlichen Spanformern, durch die Mulden 37 nicht geschwächt wird.

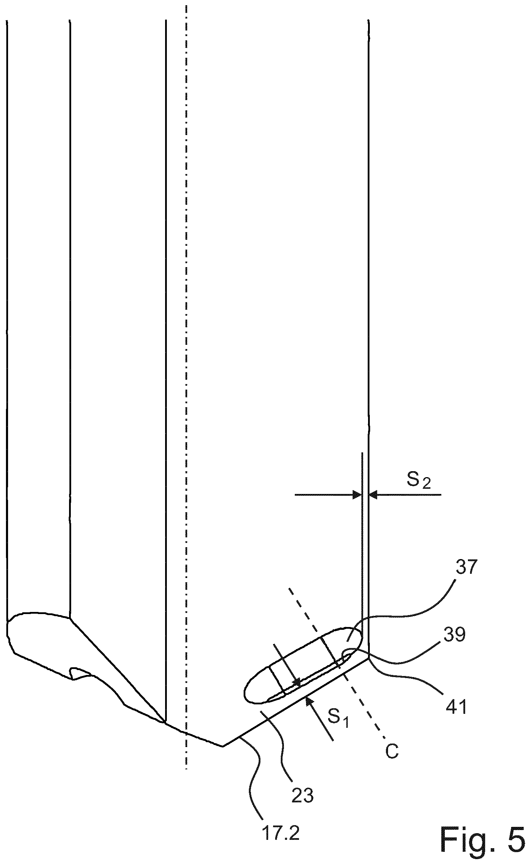

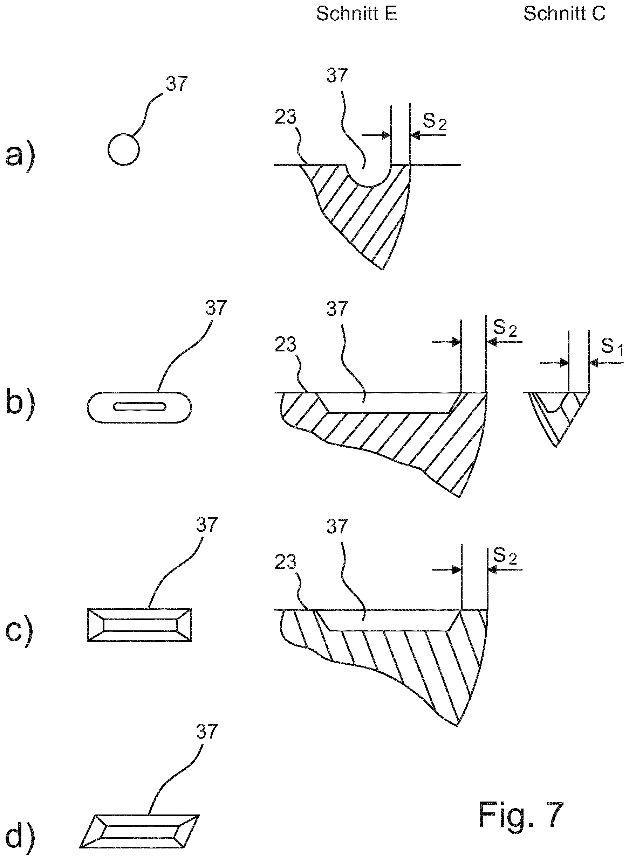

In der Figur 5 ist ein Ausführungsbeispiel eines erfindungsgemäßen Einlippenbohrers 1 dargestellt, bei dem eine erfindungsmäße Mulde 37 in die Spanfläche 23 eingebracht wurde. Die in Figur 5 dargestellten Mulde 37 unterscheidet sich in ihrer Geometrie von der Mulde 37 gemäß Figur 4. Die konkrete Form der erfindungsgemäßen Mulde 37 wird von den Eigenschaften des zu zerspanenden Werkstoffs und anderen Parametern bestimmt. In der Figur 7 sind exemplarisch Beispiele verschieden gestalteter Mulden 37 dargestellt, die sowohl bei Einlippenbohrern als auch bei Zweilippenbohrern eingesetzt werden können.

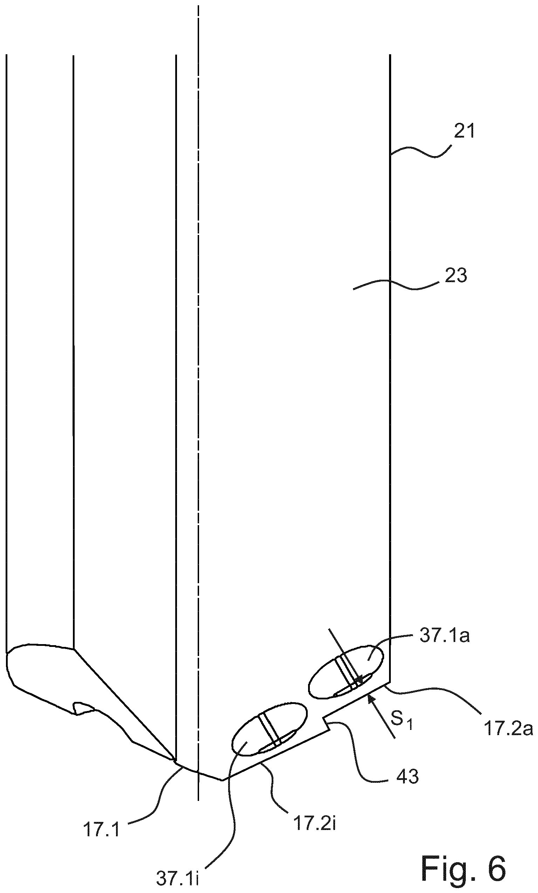

In der Figur 6 ist ein Ausführungsbeispiel eines erfindungsgemäßen Einlippenbohrers 1 dargestellt. Bei diesem Einlippenbohrer 1 ist die äußere Schneide 17.2 durch einen Spanteiler 43 zweigeteilt (siehe die Bezugszeichen 17.2i und 17.2a).

Dem entsprechend sind bei diesem Ausführungsbeispiel zwei Mulden 37.1i und 37.1a in der Spanfläche 23 vorhanden. Es ist auch möglich, dass nur einer der beiden Schneiden 17.2i oder 17.2a eine Mulde 37.1i, 37.1a zugeordnet ist (nicht dargestellt).

In der Figur 7 sind beispielhaft vier verschiedene Formen von Mulden 37 in verschiedenen Ansichten (Ansicht von oben, Schnitt entlang der Linie E; Schnitt entlang der Linie C; siehe Figur 2) dargestellt. Sie können bei Einlippenbohrern, Zweilippenbohrern und anderen Bohrwerkzeugen zum Einsatz kommen. Die Auswahl der für den jeweiligen Anwendungsfall optimalen Muldenform kann durch eine Kombination aus Erfahrungswissen und Bohrversuchen erfolgen.

In der Figur 7a) ist eine kugelförmige Mulde 37 dargestellt. Sie kann mit Hilfe eines Schleifstifts, durch Erodieren oder Abtragen mittels Laserstrahl in die Spanfläche 23 eingebracht werden. In dem Schnitt entlang der Linie E ist der kreisbogenförmige Querschnitt bzw. die kalottenförmige Form der Mulde 37 gut zu erkennen.

In der Figur 7b) ist eine langgestreckte Mulde 37 dargestellt, die zwei parallele Kanten aufweist und an ihren Enden durch ein Segment eines Kegelstumpfs abgeschlossen wird. Der Schnitt entlang der Linie E und der Schnitt entlang der Linie C zeigen die Geometrie dieser Mulde 37 im Detail. Es ist auch möglich, dass diese Mulde 37 an ihren Enden durch ein Segment einer Kugel abgeschlossen wird (nicht dargestellt).

Die Abstände S₁ und S₂ sind in den Schnitten entlang der Linien C und D eingetragen.

Das Ausführungsbeispiel gemäß Figur 7c zeigt eine Mulde 37 mit rechteckigen Grundriss. Der Schnitt entlang der Linie E kann auch quadratisch oder rechteckig sein, so dass die Seitenwände der Mulde 37 mit der Spanfläche 23 einen rechten Winkel bilden.

In der Figur 7d) ist eine Mulde 37 mit der Grundfläche eines Parallelogramms dargestellt.

Es liegt auf der Hand, dass die erfindungsgemäßen Mulden eine Vielzahl von verschiedensten Geometrien aufweisen können. Und dass die dargestellten Ausführungsbeispiele nur beschreibenden, nicht jedoch beschränkenden Charakter haben.

Im Sinne einer wirtschaftlichen Fertigung ist man natürlich bestrebt, so wenig Material aus der Spanfläche abzutragen, wie möglich. Eine Möglichkeit, das abzutragende Volumen für die Mulde 37 zu minimieren besteht darin, zwei kleine Mulden 37 einzubringen, wie dies in der Figur 6 beispielhaft dargestellt ist. Dabei ist es nicht erforderlich, dass die zugehörige Schneide einen Spanteiler 43 aufweist. Es ist beispielsweise auch möglich, zwei oder mehr Mulden hinter der äußeren Schneide 17.2 anzuordnen (nicht dargestellt).

Eine solche Mulde 37 kann verschiedene Formen haben. Letztendlich sind diese Mulden in der Regel eher kreisrund oder quadratisch in der Grundfläche und es ist ein Steg zwischen den benachbarten Mulden 37 vorhanden. Im Bereich des Stegs ist die Spanfläche 23 vorhanden. Auch bei dieser Ausführungsform tritt der erfindungsgemäße Effekt auf, nämlich die über die Spanfläche 23 ablaufenden Späne so zu beeinflussen, dass die gewünschten kurzen Späne entstehen.

Das schließt die Möglichkeit ein, dass nur eine Mulde hinter der Schneide 17.2 angeordnet ist.

Es können auch zwei oder drei Mulden hinter der Schneide 17.2 angeordnet sein. Zahl und Größe der Mulden werden immer den Anforderungen des Anwendungsfalls entsprechend gewählt.

Nachfolgend werden einige Begriffe stichwortartig erläutert und definiert.

Die Gesamtform aller schneidenden und nicht schneidenden Flächen stirnseitig am Bohrkopf wird als **Anschliff** bezeichnet. Dazu gehören auch Flächen, die nicht direkt an die Schneidkanten angrenzen, beispielsweise Flächen zur Lenkung des Kühlmittelstroms oder auch zusätzliche Freiflächen, um den Bohrer sauber schneiden zu lassen. Der Anschliff bestimmt zu einem großen Teil die Formung der Späne und wird auf den zu bearbeitenden Werkstoff abgestimmt. Ziele der Abstimmung sind dabei unter anderem die Formung möglichst günstiger Späne, eine hohe Bearbeitungsgeschwindigkeit, eine möglichst lange Lebensdauer des Bohrers und die Einhaltung der erforderlichen Qualitätsmerkmale der Bohrung wie z.B. Durchmesser, Oberfläche oder Geradheit (Mittenverlauf).

Zur Erhöhung der Lebensdauer kann der Bohrkopf mit einer **Beschichtung** als Verschleißschutz versehen sein; meist aus der Gruppe Metall-Nitride oder Metall-Oxyde; auch in mehreren abwechselnden Lagen. Die Dicke beträgt üblicherweise ca. 0,0005 bis 0,010 mm. Die Beschichtung erfolgt durch chemische oder physikalische Vakuumbeschichtungsverfahren. Die Beschichtung kann am Umfang des Bohrkopfes, an den Freiflächen oder an den Spanflächen vorgesehen sein, teilweise kann auch der gesamte Bohrkopf beschichtet werden.

**Einlippenbohrer** und **Zweilippenbohrer** sind Varianten von Tieflochbohrern. Unter Tieflochbohrern werden Werkzeuge verstanden, die nach verschiedenen bekannten Tiefbohrsystemen (zum Beispiel BTA, Ejektorbohren, Einlippen- oder Zweilippen-Tieflochbohren) arbeiten.

Einlippenbohrer und Zweilippenbohrer sind lang und schlank und weisen eine Mittelachse auf. Ihre Spanfläche ist eben; daher bezeichnet man sie auch als "gerade genutete" Werkzeuge. Sie werden verwendet zum Herstellen von Bohrungen mit einem großen Verhältnis von Länge zu Durchmesser. Sie werden vorwiegend in der industriellen Metallbearbeitung eingesetzt, wie bei der Produktion von Motorkomponenten, insbesondere bei der Produktion von Common-Rails oder Getriebewellen.

Einlippenbohrer werden üblicherweise in einem Durchmesserbereich von ca. 0,5 bis 50 mm eingesetzt. Es sind Bohrungen mit einer Länge von bis etwa 6.000 mm möglich.

Das Verhältnis von Länge zu Durchmesser (L/D) der Bohrung liegt üblicherweise in einem Bereich von ca. 10 bis über 100; es kann aber auch ca. 5 und bis etwa 250 betragen.

Einlippenbohrer zeichnen sich dadurch aus, dass eine Bohrung in hoher Qualität in einem Hub erzeugt werden kann. Sie können in Werkzeugmaschinen wie z.B. Drehmaschinen, Bearbeitungszentren oder speziellen Tiefbohrmaschinen, eingesetzt werden.

Der Zerspanungsvorgang erfolgt durch eine Relativbewegung des Bohrers zum Werkstück in Drehrichtung um eine gemeinsame Mittelachse, sowie einer Relativbewegung des Bohrers auf das Werkstück zu in Richtung der gemeinsamen Mittelachse (Vorschubbewegung). Die Drehbewegung kann durch den Bohrer und/oder das Werkstück erfolgen. Das Gleiche gilt für die Vorschubbewegung.

Die **Freifläche** ist die Fläche an der Spitze des Bohrkopfs, welche der bearbeiteten Werkstückoberfläche gegenüber liegt.

Am Umfang des Bohrkopfes sind **Führungsleisten** angeordnet zur Abstützung der beim Schneiden entstehenden Schnittkräfte in der gebohrten Bohrung. Führungsleisten sind Zylindersegmente mit dem Durchmesser des Bohrkopfes; sie liegen während des Bohrvorgangs an der Bohrungswand an. In Umfangsrichtung zwischen den Führungsleisten sind am Bohrkopf radial zurückgesetzte Segmente mit kleinerem Durchmesser angeordnet, so dass ein Spalt zwischen Bohrungswand und Bohrkopf entsteht. Der Spalt dient der Ansammlung von Kühlmittel zur Kühlung und Schmierung der Führungsleisten.

Es gibt verschiedene Anordnungen von Führungsleisten, Ausführung abhängig vom zu bearbeitenden Werkstoff. Die erste Führungsleiste, die sich entgegen der Drehrichtung des Bohrers an die Spanfläche anschließt, wird als **Rundschlifffase** bezeichnet.

Durch den **Kühlkanal** wird Kühlmittel, oder eine Mischung aus Kühlmittel und Luft (Minimalmengenschmierung) zum Schmieren und Kühlen des Bohrkopfs und der Führungsleisten sowie zum Ausspülen der Späne gefördert. Kühlmittel wird am hinteren Ende unter Druck zugeführt, passiert den Kühlkanal und tritt am Bohrkopf aus. Der Druck ist abhängig vom Durchmesser und von der Länge des Bohrers.

Durch einen angepassten Druck des Kühlmittels können Einlippenbohrer und Zweilippenbohrer sehr kleine und sehr tiefe Bohrungen in einem Zug bohren.

Als **Mittenverlauf** wird beim Bohrvorgang die Abweichung [mm] des tatsächlichen Bohrungsverlaufs von der theoretischen Mittelachse des Bohrers angesehen. Der Mittenverlauf ist ein Aspekt der Bohrungsqualität. Man ist bestrebt einen möglichst kleinen Mittenverlauf zu erreichen. Im Idealfall tritt überhaupt kein Mittenverlauf auf.

Der Mittenverlauf hängt unter anderem davon ab, ob die Drehbewegung durch den Bohrer oder das Werkstück oder durch beide erfolgt. Die Erfahrung zeigt, dass die kleinsten Mittenverlaufswerte erzielt werden, wenn die Drehbewegung durch das Werkstück oder durch Werkstück und Bohrer erfolgt.

Eine **Mulde** ist eine in die Spanfläche eingearbeitete Vertiefung. Anders als bei einem Spanformer schließt die Mulde nicht unmittelbar an die Schneide an. Das gleiche gilt in vielen Fällen auch bezüglich der Nebenschneide. Anders ausgedrückt: Zwischen der (Haupt-)Schneide und der Mulde verbleibt ein schmaler Streifen der Spanfläche.

Durch **Nachschleifen** kann ein stumpf gewordener Einlippenbohrer oder Zweilippenbohrer wieder verwendet werden. Nachschleifen bedeutet ein meist stirnseitiges Nachsetzen/Abschleifen des verschlissenen Teils des Bohrkopfes, bis alle verschlissenen Bereiche (insbesondere von Spanfläche und Freifläche) abgetragen sind und wieder eine neue und scharfe Schneide entsteht. Danach weist der Anschliff wieder seine ursprüngliche Gestalt auf.

Als **Nebenschneide** wird die Berührungslinie (Kante) zwischen Spanfläche und Rundschlifffase bezeichnet. Der Schnittpunkt zwischen Außenschneide und Nebenschneide wird als **Schneidecke** bezeichnet.

Der Bohrkopf hat mindestens eine **Schneide,** es können auch mehrere Schneiden vorhanden sein. Die Schneide ist der Bereich, der an der Zerspanung beteiligt ist. Die Schneidkante oder Schneide ist die Schnittlinie von Spanfläche und Freifläche. Die Schneide ist meistens in mehrere gerade Teil-Schneiden aufgeteilt.

Die **Spanfläche** ist der Bereich, auf dem der Span abläuft; sie kann auch aus mehreren Teil-Flächen bestehen.

Ein **Spanformer** ist eine in die Spanfläche eingearbeitete parallel zur Schneide verlaufende und unmittelbar an die Schneide anschließende Vertiefung. Anders ausgedrückt: Die Zwischen Schneidkante und Spanformer ist keine Spanfläche vorhanden.

Ein **Spanteiler** stellt eine "Unterbrechung" der äußeren Schneide dar, welche die Breite der Späne reduziert.

## Patentansprüche

1. Einlippenbohrer mit einer Spanfläche (23) oder Zweilippenbohrer mit zwei Spanflächen (23), umfassend einen Bohrkopf (5), wobei der Bohrkopf (5) eine Drehachse (3), einen Bohrdurchmesser (D) sowie eine oder zwei Schneiden (17) aufweist, wobei jeder Schneide (17) eine ebene Spanfläche (23) zugeordnet ist, wobei jeweils eine Spanfläche (23) und eine eben Wand (25) eine Längsnut (11) begrenzen, wobei in der Spanfläche (23) mindestens
eine Mulde (37) eingearbeitet ist, **dadurch gekennzeichnet, dass** zwischen
einem Rand der Mulde (37) und der Hauptschneide (17) sowie zwischen dem Rand der Mulde (37() und der Nebenschneide (21) ein schmaler Streifen der Spanfläche (23) stehenbleibt.

2. Einlippenbohrer oder Zweilippenbohrer nach Anspruch 1, **dadurch gekennzeichnet, dass** ein Querschnitt der mindestens einen Mulde (37) in einer orthogonal zu der Schneide (17.2) verlaufenden Schnittebene (C) die Form eines gleichschenkligen oder ungleichschenkligen Dreiecks hat.

3. Einlippenbohrer oder Zweilippenbohrer nach einem der vorhergehenden Ansprüche 1 oder 2, **dadurch gekennzeichnet, dass** ein Querschnitt der mindestens eine Mulde (37) in einer orthogonal zu der Schneide (17.2) verlaufenden Schnittebene (C) mindestens bereichsweise gekrümmt ist.

4. Einlippenbohrer oder Zweilippenbohrer nach einem der vorhergehenden Ansprüche, **dadurch gekennzeichnet, dass** ein Querschnitt der mindestens eine Mulde (37) in einer orthogonal zu der Schneide (17.2) verlaufenden Schnittebene (C) aus geraden und gekrümmten Abschnitten zusammengesetzt ist.

5. Einlippenbohrer oder Zweilippenbohrer nach einem der vorhergehenden Ansprüche 1 oder 3, **dadurch gekennzeichnet, dass** die mindestens eine Mulde (37) in einer orthogonal zu der Schneide (17.2) verlaufenden Schnittebene (C) die Form eines Kreisbogens aufweist.

6. Einlippenbohrer oder Zweilippenbohrer nach Anspruch 1, **dadurch gekennzeichnet, dass** ein Querschnitt der mindestens einen Mulde (37) in einer parallel zu der Schneide (17.2) verlaufenden Schnittebene (E) die Form eines Rechtecks oder eines Trapez hat.

7. Einlippenbohrer oder Zweilippenbohrer nach einem der vorhergehenden Ansprüche, **dadurch gekennzeichnet, dass** ein Querschnitt der mindestens eine Mulde (37) in einer parallel zu der Schneide (17.2) verlaufenden Schnittebene (E) mindestens bereichsweise gekrümmt ist.

8. Einlippenbohrer oder Zweilippenbohrer nach einem der vorhergehenden Ansprüche, **dadurch gekennzeichnet, dass** ein Querschnitt der mindestens eine Mulde (37) in einer parallel zu der Schneide (17.2) verlaufenden Schnittebene (E) aus geraden und gekrümmten Abschnitten zusammengesetzt ist.

9. Einlippenbohrer oder Zweilippenbohrer nach einem der vorhergehenden Ansprüche, **dadurch gekennzeichnet, dass** die mindestens eine Mulde (37) in einer parallel zu der Schneide (17.2) verlaufenden Schnittebene (E) die Form eines Kreisbogens aufweist.

10. Einlippenbohrer oder Zweilippenbohrer nach einem der vorhergehenden Ansprüche, **dadurch gekennzeichnet, dass** ein Abstand (S₁) zwischen einem Rand (39) der Mulde (37) und der Schneide (17.2) mindesten 0,05 mm, bevorzugt 0,10 mm, besonders bevorzugt 0,15 mm oder mehr beträgt.

11. Einlippenbohrer oder Zweilippenbohrer nach einem der vorhergehenden Ansprüche, **dadurch gekennzeichnet, dass** ein Abstand (S₂) zwischen dem Rand (39) der Mulde (37) und der Nebenschneide (21) mindesten 0,05 mm, bevorzugt 0,10 mm, besonders bevorzugt 0,15 mm oder mehr beträgt.

12. Einlippenbohrer oder Zweilippenbohrer nach einem der vorhergehenden Ansprüche, **dadurch gekennzeichnet, dass** entlang der Schneide (17.2) zwei oder mehr Mulden (37.1i, 37.1a) angeordnet sind.

13. Einlippenbohrer oder Zweilippenbohrer nach einem der vorhergehenden Ansprüche, **dadurch gekennzeichnet, dass** er einen Spanteiler (43) umfasst, welcher die Schneide (17.2) in eine inneren Abschnitt (17.2i) und einen äußeren Abschnitt (17.2a) teilt.

14. Einlippenbohrer oder Zweilippenbohrer nach Anspruch 13, **dadurch gekennzeichnet, dass** dem inneren Abschnitt (17.2i) der Schneide (17) eine Mulde (37.1i) zugeordnet ist.

15. Einlippenbohrer oder Zweilippenbohrer nach Anspruch 13 oder 14, **dadurch gekennzeichnet, dass** dem äußeren Abschnitt (17.2a) der Schneide (17) eine Mulde (37.1a) zugeordnet ist.

16. Einlippenbohrer oder Zweilippenbohrer nach einem der vorhergehenden Ansprüche, **dadurch gekennzeichnet, dass** der Bohrkopf (5) ganz oder teilweise mit einer Hartstoffbeschichtung versehen ist.

## Claims

1. Single-lip drill having one rake face (23) or double-lip drill having two rake faces (23), comprising a drill head (5), the drill head (5) having an axis of rotation (3), a drilling diameter (D) and one or two cutting edges (17), each cutting edge (17) being associated with a planar rake face (23), a rake face (23) and a planar wall (25) in each case delimiting a longitudinal groove (11), at least one depression (37) being incorporated in the rake face (23), **characterized in that** a narrow strip of the rake face (23) remains between an edge of the depression (37) and the main cutting edge (17) and between the edge of the depression (37) and the secondary cutting edge (21).

2. Single-lip drill or double-lip drill according to claim 1, **characterized in that** a cross section of the at least one depression (37), in a sectional plane (C) extending orthogonally to the cutting edge (17.2), has the shape of an isosceles or non-isosceles triangle.

3. Single-lip drill or double-lip drill according to one of the preceding claims 1 or 2, **characterized in that** a cross section of the at least one depression (37), in a sectional plane (C) extending orthogonally to the cutting edge (17.2), is curved at least in portions.

4. Single-lip drill or double-lip drill according to any of the preceding claims, **characterized in that** a cross section of the at least one depression (37), in a sectional plane (C) extending orthogonally to the cutting edge (17.2), is composed of straight and curved portions.

5. Single-lip drill or double-lip drill according to one of the preceding claims 1 or 3, **characterized in that** the at least one depression (37), in a sectional plane (C) extending orthogonally to the cutting edge (17.2), has the shape of a circular arc.

6. Single-lip drill or double-lip drill according to claim 1, **characterized in that** a cross section of the at least one depression (37), in a sectional plane (E) extending in parallel with the cutting edge (17.2), has the shape of a rectangle or a trapezoid.

7. Single-lip drill or double-lip drill according to any of the preceding claims, **characterized in that** a cross section of the at least one depression (37), in a sectional plane (E) extending in parallel with the cutting edge (17.2), is curved at least in portions.

8. Single-lip drill or double-lip drill according to any of the preceding claims, **characterized in that** a cross section of the at least one depression (37), in a sectional plane (E) extending in parallel with the cutting edge (17.2), is composed of straight and curved portions.

9. Single-lip drill or double-lip drill according to any of the preceding claims, **characterized in that** the at least one depression (37), in a sectional plane (E) extending in parallel with the cutting edge (17.2), has the shape of a circular arc.

10. Single-lip drill or double-lip drill according to any of the preceding claims, **characterized in that** a distance (S₁) between an edge (39) of the depression (37) and the cutting edge (17.2) is at least 0.05 mm, preferably 0.10 mm, particularly preferably 0.15 mm or more.

11. Single-lip drill or double-lip drill according to any of the preceding claims, **characterized in that** a distance (S2) between the edge (39) of the depression (37) and the secondary cutting edge (21) is at least 0.05 mm, preferably 0.10 mm, particularly preferably 0.15 mm or more.

12. Single-lip drill or double-lip drill according to any of the preceding claims, **characterized in that** two or more depressions (37.1i, 37.1a) are arranged along the cutting edge (17.2).

13. Single-lip drill or double-lip drill according to any of the preceding claims, **characterized in that** it comprises a chip breaker (43) which divides the cutting edge (17.2) into an inner portion (17.2i) and an outer portion (17.2a).

14. Single-lip drill or double-lip drill according to claim 13, **characterized in that** a depression (37.1i) is associated with the inner portion (17.2i) of the cutting edge (17).

15. Single-lip drill or double-lip drill according to claim 13 or claim 14, **characterized in that** a depression (37.1a) is associated with the outer portion (17.2a) of the cutting edge (17).

16. Single-lip drill or double-lip drill according to any of the preceding claims, **characterized in that** the drill head (5) is entirely or partially provided with a hard material coating.

## Revendications

1. Foret à une lèvre avec une face de coupe (23) ou foret à deux lèvres avec deux faces de coupe (23), comprenant une tête de perçage (5), dans lequel la tête de perçage (5) présente un axe de rotation (3), un diamètre de perçage (D) ainsi qu'un ou deux tranchants (17), dans lequel une face de coupe (23) plane est associée à chaque tranchant (17), dans lequel respectivement une face de coupe (23) et une paroi plane (25) délimitent une rainure longitudinale (11), dans lequel au moins une cavité (37) est ménagée dans la face de coupe (23), **caractérisé en ce qu'**une bande étroite de la face de coupe (23) subsiste entre un bord de la cavité (37) et le tranchant principal (17) ainsi qu'entre le bord de la cavité (37) et le tranchant principal (21).

2. Foret à une lèvre ou foret à deux lèvres selon la revendication 1, **caractérisé en ce qu'**une section transversale de la au moins une cavité (37) a la forme d'un triangle isocèle ou scalène dans un plan de coupe (C) s'étendant perpendiculairement au tranchant (17.2).

3. Foret à une lèvre ou foret à deux lèvres selon l'une quelconque des revendications précédentes 1 ou 2, **caractérisé en ce qu'**une section transversale de la au moins une cavité (37) est courbée au moins par endroits dans un plan de coupe (C) s'étendant perpendiculairement au tranchant (17.2).

4. Foret à une lèvre ou foret à deux lèvres selon l'une quelconque des revendications précédentes, **caractérisé en ce qu'**une section transversale de la au moins une cavité (37) dans un plan de coupe (C) s'étendant perpendiculairement au tranchant (17.2) est composée de parties droites et courbées.

5. Foret à une lèvre ou foret à deux lèvres selon l'une quelconque des revendications précédentes 1 ou 3, **caractérisé en ce que** la au moins une cavité (37) présente dans un plan de coupe (C) s'étendant perpendiculairement au tranchant (17.2) la forme d'un arc de cercle.

6. Foret à une lèvre ou foret à deux lèvres selon la revendication 1, **caractérisé en ce qu'**une section transversale de la au moins une cavité (37) a la forme d'un rectangle ou d'un trapèze dans un plan de coupe (E) s'étendant parallèlement au tranchant (17.2).

7. Foret à une lèvre ou foret à deux lèvres selon l'une quelconque des revendications précédentes, **caractérisé en ce qu'**une section transversale de la au moins une cavité (37) est courbée au moins par endroits dans un plan de coupe (E) s'étendant parallèlement au tranchant (17.2).

8. Foret à une lèvre ou foret à deux lèvres selon l'une quelconque des revendications précédentes, **caractérisé en ce qu'**une section transversale de la au moins une cavité (37) dans un plan de coupe (E) s'étendant parallèlement au tranchant (17.2) est composée de parties droites et courbées.

9. Foret à une lèvre ou foret à deux lèvres selon l'une quelconque des revendications précédentes, **caractérisé en ce que** la au moins une cavité (37) présente dans un plan de coupe (E) s'étendant parallèlement au tranchant (17.2) la forme d'un arc de cercle.

10. Foret à une lèvre ou foret à deux lèvres selon l'une quelconque des revendications précédentes, **caractérisé en ce qu'**une distance (S₁) entre un bord (39) de la cavité (37) et le tranchant (17.2) atteint au moins 0,05 mm, de préférence 0,10 mm, de manière particulièrement préférée 0,15 mm ou plus.

11. Foret à une lèvre ou foret à deux lèvres selon l'une quelconque des revendications précédentes, **caractérisé en ce qu'**une distance (S₂) entre le bord (39) de la cavité (37) et le tranchant secondaire (21) atteint au moins 0,05 mm, de préférence 0,10 mm, de manière particulièrement préférée 0,15 mm ou plus.

12. Foret à une lèvre ou foret à deux lèvres selon l'une quelconque des revendications précédentes, **caractérisé en ce que** deux cavités (37.1i, 37.1a) ou plus sont disposées le long du tranchant (17.2).

13. Foret à une lèvre ou foret à deux lèvres selon l'une quelconque des revendications précédentes, **caractérisé en ce qu'**il comprend un brise-copeaux (43), lequel divise le tranchant (17.2) en une partie intérieure (17.2i) et une partie extérieure (17.2a).

14. Foret à une lèvre ou foret à deux lèvres selon la revendication 13, **caractérisé en ce qu'**une cavité (37.1i) est associée à la partie intérieure (17.2i) du tranchant (17).

15. Foret à une lèvre ou foret à deux lèvres selon la revendication 13 ou 14, **caractérisé en ce qu'**une cavité (37.1a) est associée à la partie extérieure (17.2a) du tranchant (17).

16. Foret à une lèvre ou foret à deux lèvres selon l'une quelconque des revendications précédentes, **caractérisé en ce que** la tête de perçage (5) est pourvue entièrement ou partiellement d'un revêtement en matière dure.
